# EUROPEAN PATENT APPLICATION

(11) **EP 3 757 875 A1**
(43) Date of publication of application: **30.12.2020**
(21) Application number: 19889463.6
(22) Date of filing: 29.08.2019
(51) Int. Cl.: G06K 9/00

(54) **OBSTACLE AVOIDANCE METHOD AND DEVICE USED FOR DRIVERLESS VEHICLE**

(30) Priority: 30.11.2018 CN 201811458406
(71) Applicant: Baidu Online Network Technology (Beijing) Co., Ltd., Beijing 100085 (CN)
(72) Inventor: WANG, Yue, Beijing 100085 (CN); SHEN, Donghui, Beijing 100085 (CN); CHENG, Lie, Beijing 100085 (CN); YU, Gao, Beijing 100085 (CN); LI, Wenbo, Beijing 100085 (CN); XUE, Jingjing, Beijing 100085 (CN)
(74) Representative: Gill Jennings & Every LLP
(86) International application number: PCT/CN2019/103253
(87) International publication number: WO 2020/107974

(57) **Abstract**

Disclosed by the embodiments of the present application are an obstacle avoidance method and device used for a driverless vehicle. The detailed description of the preferred embodiment for said method comprises: in response to determining that there is an obstacle in a preset driving path, sending obstacle information to a preset terminal device so that the preset terminal device displays the obstacle information in a display page thereof, the obstacle information comprising an image of the obstacle and location information; receiving obstacle category information which is sent by the preset terminal device and which is inputted according to the displayed obstacle information; and determining an obstacle avoidance instruction for a driverless vehicle according to the obstacle category indicated by the category information. The present preferred embodiment reduces operations such as decreasing driving speed, swerving and even stopping the vehicle in order to avoid an obstacle, which improves driving time delays caused by obstacles.

## Description

This patent application claims priority to Chinese Patent Application No. 201811458406.9, filed on November 30, 2018, titled "Obstacle Avoidance Method and Apparatus for Autonomous Driving Vehicle," applicant of which is Baidu Online Network Technology (Beijing) Co., Ltd.. The disclosure of the aforementioned application IS hereby incorporated by reference in its entirety.

### TECHNICAL FIELD

Embodiments of the present disclosure relate to the field of computer technology, in particular, to the field of autonomous driving vehicles, and more particularly, to an obstacle avoidance method and apparatus for an autonomous driving vehicle.

### BACKGROUND

Autonomous driving vehicles need to perceive the environment as they travel. Detecting an obstacle in front is an important part of the environmental perception when the environment is perceived.

It is generally desirable that a camera disposed on an autonomous driving vehicle captures an environmental image and uses a laser radar to measure the distance of a front object. The vehicle-mounted brain of the autonomous driving vehicle may analyze the environmental image acquired by the camera to determine if there is an obstacle in front, and determine the distance of obstacles by using the data fed back by the laser radar.

### SUMMARY

The embodiment of the disclosure provides an obstacle avoidance method and apparatus for an autonomous driving vehicle.

According to a first aspect, an embodiment of the present disclosure provides an obstacle avoidance method for an autonomous driving vehicle. The method includes: in response to determining that there is an obstacle in a preset travel path, transmitting obstacle information to a preset terminal device so that the preset terminal device displays the obstacle information on a display page of the preset terminal device, the obstacle information including an image of the obstacle and position information; receiving category information of the obstacle transmitted by the preset terminal device and inputted according to the displayed obstacle information, where the category information is used to indicate a category of the obstacle; and determining an obstacle avoidance instruction of the autonomous driving vehicle according to the category of the obstacle indicated by the category information.

In some embodiments, the transmitting obstacle information to a preset terminal device in response to determining that there is an obstacle in a preset travel path so that the preset smart terminal device displays the obstacle information in a display page of the preset terminal includes: in response to determining that there is the obstacle in the preset travel path, determining reference category information of the obstacle using a pre-trained obstacle category recognition model, where the reference category information is used to indicate whether the obstacle belongs to a negligible obstacle; and transmitting the obstacle information to the preset terminal device so that the preset terminal device displays the obstacle information on the display page of the preset terminal, in response to the reference category information indicating that the obstacle does not belong to the negligible obstacle; where the obstacle category recognition model is obtained by training an initial obstacle category recognition model using a plurality of pieces of historical obstacle information and a plurality of pieces of historical category information of the plurality of historical obstacles respectively set according to the plurality of historical obstacle information, and is configured for determining the reference category information of the obstacle according to the obstacle information.

In some embodiments, before the receiving category information of the obstacle transmitted by the preset terminal device and inputted according to the displayed obstacle information, the method further includes: determining a distance between the obstacle and the autonomous driving vehicle in response to the reference category information indicating that the obstacle does not belong to the negligible obstacle; and if the distance is smaller than a preset distance threshold, generating an instruction for decelerating.

In some embodiments, before the receiving category information of the obstacle transmitted by the preset terminal device and inputted according to the displayed obstacle information, the method further includes: sending, to the preset terminal device, prompt information for indicating the obstacle in the preset driving path, so that the preset terminal device plays the prompt information.

In some embodiments, the determining an obstacle avoidance instruction of the autonomous driving vehicle according to the category of the obstacle indicated by the category information includes in response to the category information indicating that the obstacle does not belong to a negligible obstacle, inputting current state information and the obstacle information of the autonomous driving vehicle to a pre-trained obstacle avoidance model to generate an obstacle avoidance instruction, where the obstacle avoidance model is obtained by training an initial obstacle avoidance model using a plurality of historical obstacle avoidance records.

In some embodiments, before the receiving category information of the obstacle transmitted by the preset terminal device and inputted according to the displayed obstacle information, the method further includes based on acquired current environment data of the autonomous driving vehicle, determining whether there is the obstacle in the preset travel path.

According to a second aspect, an embodiment of the present disclosure provides an obstacle avoidance apparatus for an autonomous driving vehicle, the apparatus including a transmitting unit configured to in response to determining that there is an obstacle in a preset travel path, transmit obstacle information to a preset terminal device so that the preset terminal device displays the obstacle information on a display page of the preset terminal device, the obstacle information including an image of the obstacle and position information; a receiving unit configured to receive category information of the obstacle transmitted by the preset terminal device and inputted according to the displayed obstacle information, where the category information is used to indicate a category of the obstacle; and an instruction generating unit configured to determine an obstacle avoidance instruction of the autonomous driving vehicle according to the category of the obstacle indicated by the category information.

In some embodiments, the transmitting unit is further configured to in response to determining that there is the obstacle in the preset travel path, determine reference category information of the obstacle using a pre-trained obstacle category recognition model, where the reference category information is used to indicate whether the obstacle belongs to a negligible obstacle; and transmit the obstacle information to the preset terminal device so that the preset terminal device displays the obstacle information on the display page of the preset terminal, in response to the reference category information indicating that the obstacle does not belong to the negligible obstacle; where the obstacle category recognition model is obtained by training an initial obstacle category recognition model using a plurality of pieces of historical obstacle information and a plurality of pieces of historical category information of the plurality of historical obstacles respectively set according to the plurality of historical obstacle information, and is configured for determining the reference category information of the obstacle according to the obstacle information.

In some embodiments, the transmitting unit is further configured to determine a distance between the obstacle and the autonomous driving vehicle in response to the reference category information indicating that the obstacle does not belong to the negligible obstacle; and if the distance is smaller than a preset distance threshold, generating an instruction for decelerating.

In some embodiments, the apparatus further includes a prompt unit configured to, before the receiving unit receives category information of the obstacle transmitted by the preset terminal device and inputted according to the displayed obstacle information, send, to the preset terminal device, prompt information for indicating the obstacle in the preset driving path, so that the preset terminal device plays the prompt information.

In some embodiments, the instruction generation unit is further configured to in response to the category information indicating that the obstacle does not belong to a negligible obstacle, input current state information and obstacle information of the autonomous driving vehicle to a pre-trained obstacle avoidance model to generate an obstacle avoidance instruction, where the obstacle avoidance model is obtained by training an initial obstacle avoidance model using a plurality of historical obstacle avoidance records.

In some embodiments, the apparatus further includes a determining unit configured to before the transmitting unit transmits the obstacle information to the preset terminal device in response to determining that there is the obstacle in the preset travel path, determine whether there is the obstacle in the preset travel path based on acquired current environment data of the autonomous driving vehicle.

According to a third aspect, an embodiment of the present disclosure provides an electronic device including: one or more processors; a storage apparatus storing one or more programs, where the one or more programs when executed by the one or more processors cause the one or more processors to implement the method as described in any one of embodiments of the first aspect.

In a fourth aspect, an embodiment of the present disclosure provides a computer readable medium storing a computer program, where the computer program, when executed by a processor, implements the method as described in any one of embodiments of the first aspect.

An obstacle avoidance method and apparatus for an autonomous driving vehicle according to an embodiment of the present disclosure transmits obstacle information to a preset terminal device in response to determining that there is an obstacle in a preset travel path, so that the preset terminal device displays obstacle information on a display page of the preset terminal device, and then receives category information of an obstacle that is input according to the obstacle information and that is sent by the preset terminal device. Finally, the obstacle avoidance command of the autonomous driving vehicle is determined according to the category of the obstacle indicated by the category information. By using the preset terminal device as the man-machine interaction interface, the autonomous driving vehicle can receive the user determination on the obstacle category and decide the obstacle avoidance strategy according to the user determination on the obstacle category. According to the above-described method, during traveling of the autonomous driving vehicle, the obstacle is recognized manually, and the obstacle avoidance instruction is determined according to the above-described recognition result, which reduces the operations such as deceleration driving, bypassing, and even stopping, which are performed to avoid all the obstacles, thereby improving the phenomenon that the driving time is prolonged due to the deceleration driving, bypassing, and even stopping, which are performed to avoid the obstacles.

### BRIEF DESCRIPTION OF THE DRAWINGS

Other features, objects and advantages of the present disclosure will become more apparent by reading the following detailed description of non-limiting embodiments with reference to the accompanying drawings..
FIG. 1 is an example system architecture diagram in which an obstacle avoidance method for an autonomous driving vehicle of an embodiment of the present disclosure may be applied;
FIG. 2 is a flow chart of an embodiment of an obstacle avoidance method for an autonomous driving vehicle according to the present disclosure.
FIG. 3 is a schematic diagram of an application scenario of an obstacle avoidance method for an autonomous driving vehicle according to the present disclosure;
FIG. 4 is a flowchart of yet another embodiment of an obstacle avoidance method for an autonomous driving vehicle according to the present disclosure;
FIG. 5 is a schematic structural diagram of an embodiment of an obstacle avoidance device for an autonomous driving vehicle according to the present disclosure; and
FIG. 6 is a schematic structural diagram of a computer system adapted for implementing an electronic device according to an embodiment of the present disclosure.

### DETAILED DESCRIPTION

The present disclosure is described in further detail below with reference to the accompanying drawings and examples. It is to be understood that the specific embodiments described herein are merely illustrative of the related disclosure and are not restrictive of the disclosure. It is also to be noted that, for ease of description, only parts related to the disclosure are shown in the drawings.

It should be noted that the embodiments in the present disclosure and the features in the embodiments may be combined with each other without conflict. The present disclosure will now be described in detail with reference to the accompanying drawings and examples thereof

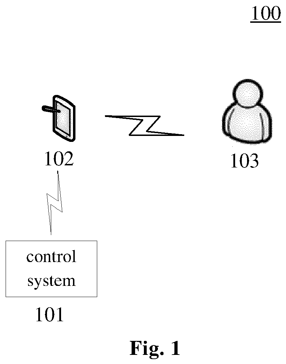

FIG. 1 illustrates an example system architecture 100 in which an obstacle avoidance method for an autonomous driving vehicle of an embodiment of the present disclosure may be applied.

As shown in FIG. 1, the system architecture 100 may include a control system 101 of an autonomous driving vehicle, a terminal device 102, and a user 103. The terminal device 102 may communicate with the control system 101 via a network. The network may include various types of connections, such as wired, wireless communication links, or fiber optic cables, and the like.

The control system 101 includes a sensing unit and a driving decision unit. The sensing unit includes a plurality of vehicle-mounted sensors that can acquire environmental data of the autonomous driving vehicle in real time. Vehicle-mounted sensors may include vehicle-mounted cameras, laser radar sensors, millimeter wave radar sensor, collision sensor, velocity sensor, air pressure sensor, and the like.

The driving decision unit may be an ECU (Electronic Control Unit), or may be an onboard computer, or may be a remote server. The driving decision unit may acquire the data acquired by the vehicle-mounted sensor, process the data, and respond to the data.

The control system 101 may send the environment data of the autonomous driving vehicle acquired by the onboard sensor to the terminal device 102 via the network. The terminal device 102 may present an environmental image in its presentation page. The environment image may include obstacle information.

The user 103 may interact with the control system 101 via the network using the terminal device 102, to receive or send messages, etc. Various client applications may be installed on the terminal device 102, such as, a map application, a video playback application, and the like. The user 103 may determine whether an obstacle is negligible according to the image of the obstacle in the environment image displayed in the terminal device, and input a determination result to the terminal device 102. The terminal device 102 may transmit the determination result to the control system 101.

The terminal device 102 may be hardware or software. When the terminal device 104 is hardware, it may be various electronic devices having a display screen and supporting a map display, including, but not limited to, a smartphone, a tablet computer, a laptop computer, a desktop computer, and the like. When the terminal device 102 is software, it may be installed in the electronic device listed above. The terminal device may be implemented as a plurality of software pieces or software modules, such as software pieces or software modules for providing distributed services, or as a single software piece or software module, which is not specifically limited herein.

In some application scenarios, the terminal device 102 may be a terminal device disposed on a remote server, and the user 103 may also be located on the remote server.

In other application scenarios, the terminal device may be a terminal device disposed in an autonomous driving vehicle, and the user may also be located in the autonomous driving vehicle.

It should be noted that the obstacle avoidance method for an autonomous driving vehicle according to an embodiment of the present disclosure is generally performed by the control system 103, and accordingly, an obstacle avoidance apparatus for an autonomous driving vehicle is generally arranged in the control system 103.

It should be understood that the number of terminal devices and control systems in FIG. 1 is merely illustrative. There may be any number of terminal devices and control systems as needed.

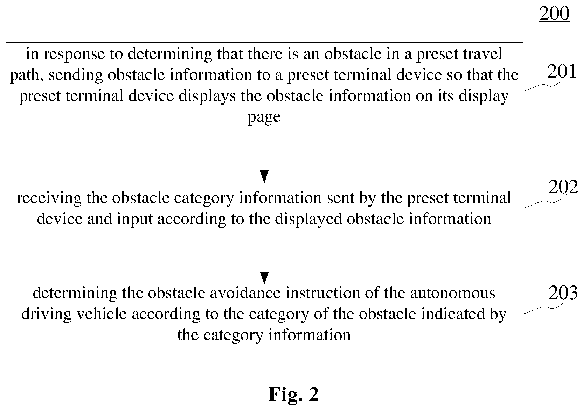

With continuing reference to FIG. 2, there is shown a flow 200 of an embodiment of an obstacle avoidance method for an autonomous driving vehicle in accordance with the present disclosure. The obstacle avoidance method for an autonomous driving vehicle includes following steps.

Step 201 includes in response to determining that there is an obstacle in a preset travel path, sending obstacle information to a preset terminal device so that the preset terminal device displays the obstacle information on its display page.

Generally, it is necessary to plan the driving path of the autonomous driving vehicle in advance before the autonomous driving vehicle travels on the road. In this embodiment, the preset travel path may be a next path for traveling by the autonomous driving vehicle planned in the planned path when the autonomous driving vehicle is in the current position.

In the present embodiment, the execution body of the obstacle avoidance method for the autonomous driving vehicle may first determine whether there is an obstacle in the preset running path through various methods. In response to determining that there is an obstacle in the preset travel path, the above-mentioned execution body may transmit obstacle information to the preset terminal device (for example, the terminal device shown in FIG. 1). The preset terminal device can display obstacle information on its display page.

In some alternative implementations of the present embodiment, prior to step 201, the obstacle avoidance method for the autonomous driving vehicle may further include determining whether there is an obstacle in the preset travel path based on the acquired current environment data of the autonomous driving vehicle.

In these alternative implementations, the execution body of the obstacle avoidance method for the autonomous driving vehicle, such as the control system shown in FIG. 1, may acquire current environmental data of the autonomous driving vehicle.

Generally, the autonomous driving vehicle may include a sensing unit. The sensing unit includes a plurality of vehicle-mounted sensors. A plurality of vehicle-mounted sensors are used for collecting environmental data. The environment data includes state information of the autonomous driving vehicle itself and state information around the autonomous driving vehicle. The state information includes information such as speed, acceleration, steering angle, and position. The surrounding state information includes information such as road position, road direction, surrounding objects, vehicles, pedestrians, and the like.

For example, the vehicle-mounted camera arranged at the front end of the vehicle can acquire an image of the road environment in front of the autonomous driving vehicle. The laser radar sensor can collect the data of the position, the size and the external appearance of the object in the surroundings of the autonomous driving vehicle.

In some application scenarios, the execution body may acquire the environment data in real time during the traveling of the autonomous driving vehicle, so as to determine whether there is an obstacle in the preset travel path of the autonomous driving vehicle according to the environment data.

The obstacle may be a vehicle, a pedestrian, an animal, a plant, a warning sign, or the like. Generally, the execution body may analyze the environment data acquired in real time, and determine the surrounding environment according to a predetermined obstacle determination condition to determine whether there is an obstacle in a predetermined driving path of the autonomous driving vehicle. For example, the predetermined obstacle determination condition may include a height of an object on the ground being higher than a first predetermined height on the ground level. Alternatively, a distance between the object extending from the air and the ground is smaller than a second preset height. The first preset height here may for example be 10 cm. The second preset height may be, for example, the height of the autonomous driving vehicle.

In some application scenarios, the execution body may input the environment data acquired in real time into a pre-trained obstacle determination model to determine whether there is an obstacle in the preset travel path of the autonomous driving vehicle. The obstacle determination model may be, for example, a support vector machine model, a naive Bayesian model, or neural network model, etc.

The obstacle determination model may be obtained by training an initial obstacle determination model using a plurality of pieces of environmental data marked with an obstacle and pieces of environmental data marked with no obstacle.

The obstacle information may include an image of an obstacle. For example, an image of an obstacle may be an image of an obstacle captured by an onboard camera, or may be an image of an obstacle generated based on a shape, a size, or the like of an obstacle scanned by an onboard laser radar sensor.

Further, the position data of the obstacle may be displayed on the display page of the preset terminal device. The position data of the obstacle may include, for example, coordinates of the obstacle.

In some application scenarios, the preset terminal device may be disposed in the autonomous driving vehicle. In other application scenarios, the preset terminal device may be disposed in a remote service.

Step 202 includes receiving the obstacle category information sent by the preset terminal device and input according to the displayed obstacle information.

The execution body may receive, through a network, category information of an obstacle sent by a preset terminal device and input by a preset user. The category information is used to indicate the category of the obstacle. The categories of obstacles include negligible obstacles and non-negligible obstacles. The category information described above may include numbers, symbols, or combinations of numbers and symbols, etc. That is, an obstacle belongs to a negligible obstacle, or a non-negligible obstacle.

Whether the vehicle needs to avoid an obstacle may be determined based on the determination on whether there is an obstacle in the preset travel path. Generally, when there is an obstacle in the preset travel path, an obstacle avoidance strategy needs to be implemented; and when there is no obstacle, the autonomous driving vehicle may continue to travel according to the preset travel path. The obstacle avoidance strategy includes changing a preset travel path, bypassing an obstacle, decelerating, stopping, and the like.

In the present embodiment, for a negligible obstacle, the autonomous driving vehicle traveling along the predetermined route may be used as an obstacle avoidance strategy.

Since the control system can not accurately determine whether all the obstacles are negligible, if the negligible obstacle is mistakenly determined as a non-negligible obstacle, the autonomous driving vehicle may take more time for traveling due to using avoidance strategies such as decelerating, or bypassing the vehicle during the traveling.

The preset user can observe the obstacle information on the screen of the preset terminal device. If the obstacle itself will not cause damage to the autonomous driving vehicle, and the autonomous driving vehicle will not cause significant harm to the obstacle if the autonomous driving vehicle travels over the obstacle, then the above obstacle can be ignored. Otherwise, the obstacle is not negligible. For example, the obstacles can be grass growing on the ground, or leaves and ribbons hanging from high altitude.

The preset user may input the determination result of the obstacle category to the preset terminal device. For example, the determination result may be input through a text input window or an audio input window. The determination result can also be input according to the selection item of the obstacle category displayed on the screen of the preset terminal.

The preset terminal device may send the category information of the obstacle to the execution main body.

In some application scenarios, the preset user may be a user located in an autonomous driving vehicle, such as a vehicle security officer or the like.

In other application scenarios, the preset user may be a remote monitoring user located at a remote server.

Step 203 includes determining the obstacle avoidance instruction of the autonomous driving vehicle according to the category of the obstacle indicated by the category information .

In the present embodiment, if the category information indicates that the obstacle belongs to a negligible obstacle, the obstacle avoidance instruction generated by the execution body instructs the autonomous driving vehicle to continue traveling along the preset running path.

If the category information indicates that an obstacle belongs to a non-negligible obstacle, the obstacle avoidance instruction generated by the execution body includes a bypass travel path, a bypass travel speed, and the like for changing a predetermined travel path to bypass the obstacle.

In some alternative implementations of the present embodiment, if the category information indicates that the obstacle belongs to a non-negligible obstacle, the current state information of the autonomous driving vehicle and the obstacle information of the obstacle are input to a pre-trained obstacle avoidance model which is based on training the initial obstacle avoidance model using a plurality of historical obstacle avoidance records to generate an obstacle avoidance instruction.

The obstacle avoidance strategy model may be various existing obstacle avoidance strategy models, such as an obstacle avoidance strategy based on a neural network, an obstacle avoidance strategy model based on DRL (Deep Reinforcement Learning), and the like.

In these embodiments, when the category information input by the preset user indicates that the obstacle belongs to the non negligible obstacle, the current state of the autonomous driving vehicle, the position of the obstacle and other relevant data can be input into the pre-trained obstacle avoidance strategy model to generate obstacle avoidance instructions. The current state indicated by the current state information of the vehicle may include, for example, the current position of the vehicle, the vehicle speed, the acceleration, the attitude angle, etc. For example, the obstacle avoidance instruction may include the bypassing path, the bypassing speed, etc., in addition, the obstacle avoidance instruction may also include the parking instruction, etc.

In these alternative implementations, the obstacle avoidance policy model is configured to generate obstacle avoidance instructions for non-negligible obstacles, to avoid collision of the vehicle with the obstacle, and to accelerate the generation of the obstacle avoidance instructions.

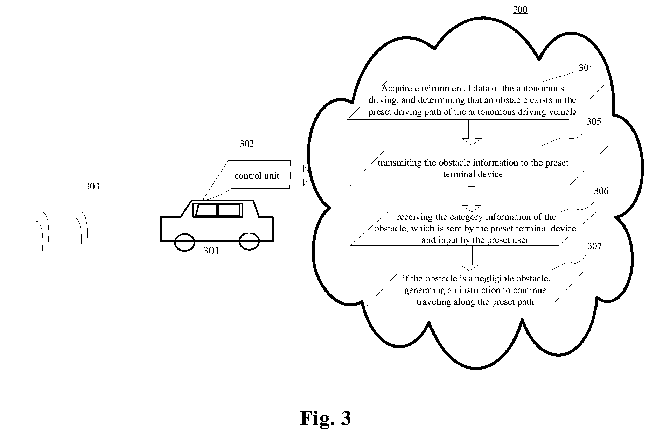

With continued reference to FIG. 3, FIG. 3 is a schematic diagram of an application scenario 300 of an obstacle avoidance method for an autonomous driving vehicle according to the present embodiment. In the application scenario of FIG. 3, a vehicle-mounted sensor on the autonomous driving vehicle 301 may acquire environmental data of the autonomous driving vehicle 301 in real time. There are obstacles 303 in the preset travel path of the autonomous driving vehicle 301. The obstacle 303 may be grass, for example. The onboard control unit 302 determines that an obstacle 304 exists in the preset driving path of the autonomous driving vehicle based on the acquired environmental data of the autonomous driving vehicle in the current state. Then, in response to determining that there is an obstacle in the traveling direction of the autonomous driving vehicle, the control unit 302 transmits the obstacle information to the preset terminal device so that the preset terminal device displays the obstacle information on its display page so that the preset terminal device displays the obstacle information 305 on its display page, the obstacle information including an image of the obstacle and position information. Next, the control unit 302 receives the category information 306 of the obstacle, which is sent by the preset terminal device and input by the preset user according to the image of the obstacle, where the category information of the obstacle is used to indicate that the obstacle is a negligible obstacle. Finally, the control unit 302 instructs the obstacle to be a negligible obstacle according to the category information of the obstacle input by the preset user, and generates an instruction 307 to continue traveling along the preset path.

According to the method provided in the above embodiment of the present disclosure, the obstacle information is transmitted to the preset terminal device in response to determining that there is an obstacle in the preset travel path, so that the preset terminal device displays the obstacle information on its display page, then the category information of the obstacle inputted by the preset user according to the obstacle information is received, and finally the obstacle avoidance instruction of the autonomous driving vehicle is determined according to the category of the obstacle indicated by the category information.

By using the preset terminal device as the human-machine interaction interface, the above method enables the autonomous driving vehicle to receive a user determination on the category of the obstacle, and decides the obstacle avoidance instruction according to the determination of the preset user on the category of the obstacle. The above method realizes the manual auxiliary recognition of obstacles in the driving process of the autonomous driving vehicle, and determines the obstacle avoidance instructions according to the above auxiliary recognition results, which can reduce the deceleration, bypassing and even parking operations due to avoiding obstacles, so as to improve the driving time extension caused by avoiding all obstacles.

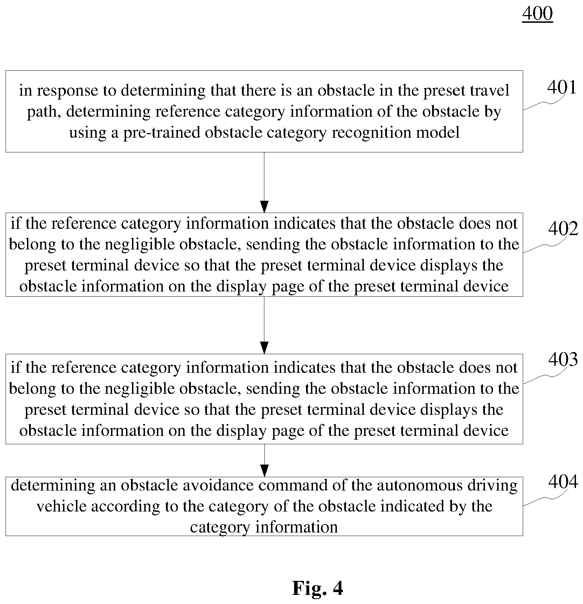

Referring further to FIG. 4, there is shown a flow 400 of yet another embodiment of an obstacle avoidance method for an autonomous driving vehicle. The flow 400 of the obstacle avoidance method for an autonomous driving vehicle includes the following steps.

Step 401 includes in response to determining that there is an obstacle in the preset travel path, determining reference category information of the obstacle by using a pre-trained obstacle category recognition model.

In the present embodiment, a pre-trained obstacle category recognition model may be provided within the execution body of the obstacle avoidance method for the autonomous driving vehicle (for example, the control system shown in FIG. 1). Alternatively, the above-mentioned execution body may communicate with an electronic device provided with an obstacle category recognition model through a wired network or a wireless network. The obstacle category recognition model is configured for determining the reference category information of the obstacle according to the input obstacle information.

The pre-trained obstacle category recognition model described above may be obtained by training an initial obstacle category recognition model based on a plurality of pieces of historical obstacle information and a plurality of pieces of historical category information of historical obstacles set for the plurality of pieces of historical obstacle information. The obstacle category recognition model of the pre-training is configured for determining the reference category of the obstacle according to the obstacle information.

The above reference category information is used to indicate whether an obstacle belongs to a negligible obstacle.

The obstacle category recognition model described above may be various machine learning models, such as artificial neural network membranes, convolution neural network models, and the like.

Step 402 includes if the reference category information indicates that the obstacle does not belong to the negligible obstacle, sending the obstacle information to the preset terminal device so that the preset terminal device displays the obstacle information on the display page of the preset terminal device.

In the present embodiment, if the obstacle indicated by the reference category information of the obstacle in step 402 belongs to a negligible obstacle, the above-mentioned obstacle may be ignored by the above-mentioned execution body, and the obstacle avoidance instruction generated by the above-mentioned execution body instructs the autonomous driving vehicle to follow the original travel path to continue traveling.

If the reference category information indicates that the obstacle does not belong to a negligible obstacle, the execution body may send the related data of the obstacle to the preset terminal device, so that the preset terminal device displays the obstacle information on the display page of the preset terminal device.

In the present embodiment, the environment data is processed for one time by using the obstacle category recognition model before the obstacle related data is transmitted to the preset terminal device for display. The workload of recognizing category information of the obstacle by the preset user is reduced, which is helpful to reducing the period for processing the displayed obstacle by the preset user.

Step 403 includes receiving the category information of the obstacle that is sent by the preset terminal device and input by the preset user according to the displayed obstacle information.

In the present embodiment, step 403 is the same as step 202 of the embodiment shown in FIG. 2, and details are not described herein.

Step 404 includes determining an obstacle avoidance command of the autonomous driving vehicle according to the category of the obstacle indicated by the category information.

In this embodiment, step 404 is the same as step 203 of the embodiment shown in FIG. 2, and details are not described herein.

As can be seen from FIG. 4, compared with the embodiment corresponding to FIG. 2, the flow 400 of the obstacle avoidance method for an autonomous driving vehicle in the present embodiment highlights the step of determining reference category information of an obstacle using a pre-trained obstacle category recognition model, and if the reference category information indicates that the obstacle is an un-negligible obstacle, and then sending the related data of the obstacle to a preset terminal device, so that whether the obstacle is negligible can be determined by the obstacle category recognition model first, and then determined by the preset user. On the one hand, the workload of the preset user can be reduced, and on the other hand, the driving time of the autonomous driving vehicle can be further reduced.

In some alternative implementations of the present embodiment, before receiving the category information of the obstacle sent by the preset terminal and input by the preset user according to the displayed obstacle information in step 403, the obstacle avoidance method for the autonomous driving vehicle further includes: determining a distance between the obstacle and the autonomous driving vehicle if the reference category information indicates that the obstacle does not belong to a negligible obstacle; and if the distance is smaller than a preset distance threshold, an instruction for decelerating is generated.

In these alternative implementations, since the reference category information indicates that the obstacle does not belong to a negligible obstacle, the execution body of the obstacle avoidance method for an autonomous driving vehicle may further determine the distance between the obstacle and the autonomous driving vehicle. When the distance between the obstacle and the autonomous driving vehicle is smaller than the preset distance threshold value, the autonomous driving vehicle can be decelerated by generating a deceleration driving command, so that the preset user has enough time to determine the category of the obstacle according to the obstacle information displayed on the preset terminal device, so as to avoid the phenomenon that the autonomous driving vehicle collides with the obstacle due to the fact that the preset user fails to make a determination on the category of the obstacle in time.

In some alternative implementations of embodiments of the method for avoiding an obstacle in an autonomous driving vehicle according to the present disclosure, before the step 203 of the embodiment shown in FIG. 2 and the step 404 of the embodiment shown in FIG. 4, the method for avoiding an obstacle in an autonomous driving vehicle may further include: sending, to a preset terminal device, prompt information for prompting an obstacle in a preset path, so that the preset terminal device plays the above-mentioned prompt information.

In these alternative implementations, the execution body determines that there is an obstacle in the preset travel path, and sends obstacle information to the preset terminal device, so that the preset terminal device may send prompt information for prompting an obstacle in the travel direction to the preset terminal device while displaying the obstacle information on the display page of the preset terminal device, so that the preset terminal device plays the prompt information. The prompt information is used for prompting the preset user to determine the category of the obstacle according to the image and position information of the obstacle displayed on the display page of the preset terminal device.

In this way, the preset user does not need to keep observing the details of the environment image displayed on the display page of the preset terminal device, and only needs to determine the obstacle information displayed on the preset terminal device when the prompt information is received, so as to determine the category of the obstacle in the preset travel path. The workload of the preset user can be reduced, and mis-determination, missed determination, and the like caused by fatigue of the preset user can be avoided.

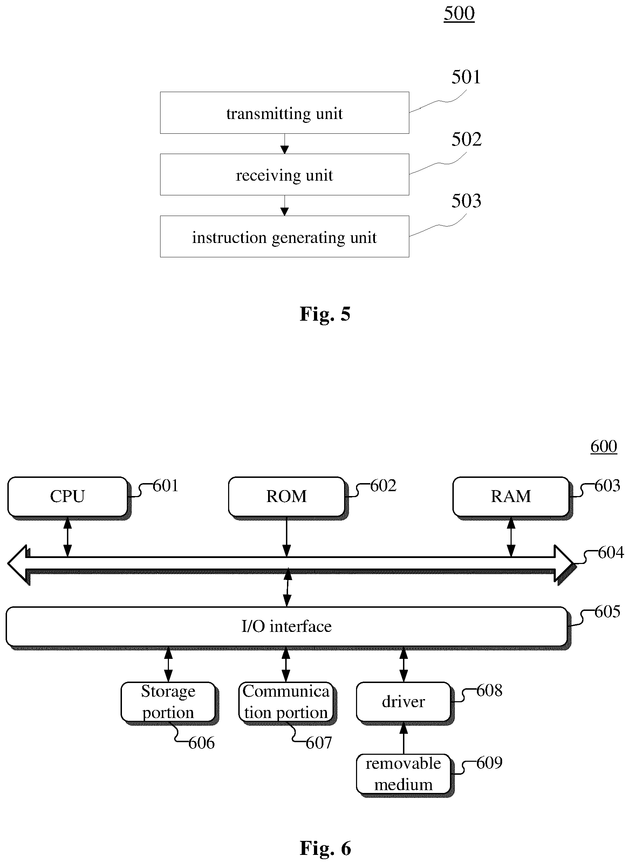

With further reference to FIG. 5, as an implementation of the method shown in above figures, the present disclosure provides an embodiment of an obstacle avoidance apparatus for an autonomous driving vehicle. The apparatus embodiment corresponds to the method embodiment shown in FIG. 5. The apparatus may be specifically applied to the obstacle avoidance apparatus 500 for an autonomous driving vehicle according to the present embodiment as shown in FIG. 5. The obstacle avoidance apparatus 500 for an autonomous driving vehicle includes a transmitting unit 501, a receiving unit 502, and an instruction generating unit 503. The transmitting unit 501 is configured to transmit obstacle information to a preset terminal device in response to determining that there is an obstacle in a preset travel path, so that the preset terminal device displays the obstacle information on a display page of the preset terminal device. The obstacle information includes an image of the obstacle and position information. The receiving unit 502 is configured receive category information of an obstacle that is input by a preset user according to displayed obstacle information and sent by the preset terminal device, where the category information is used to indicate a category of the obstacle. The instruction generating unit 503 is configured to determine an obstacle avoidance instruction of the autonomous driving vehicle according to the category of the obstacle indicated by the category information.

In the present embodiment, the specific processing of the transmitting unit 501, the receiving unit 502, and the instruction generating unit 503 for the obstacle avoidance apparatus 500 of the autonomous driving vehicle and the technical effects thereof may be described with reference to step 201, step 202, and step 203 in the corresponding embodiment of FIG. 2, respectively, and details are not described herein.

In some alternative implementations of the present embodiment, the transmitting unit 501 is further configured to determine reference category information of an obstacle by using a pre-trained obstacle category recognition model in response to determining that there is an obstacle in a preset travel path, the reference category information being used to indicate whether the obstacle belongs to a negligible obstacle or not; if the reference category information indicates that the obstacle does not belong to the negligible obstacle, send the obstacle information to the preset terminal device so that the preset terminal device displays the obstacle information on the display page of the preset terminal device; where the obstacle category recognition model is obtained by training an initial obstacle category recognition model based on using a plurality of piece historical obstacle information and a pieces of historical category information of the plurality of historical obstacles respectively set by a preset user according to the plurality of historical obstacle information, for determining reference category information of an obstacle according to the obstacle information;

In some alternative implementations of the present embodiment, the transmitting unit 501 is further configured to determine the distance between the obstacle and the autonomous driving vehicle if the reference category information indicates that the obstacle does not belong to a negligible obstacle; and if the distance is smaller than a preset distance threshold, generate an instruction to decelerate.

In some alternative implementations of the present embodiment, the obstacle avoidance apparatus 500 for an autonomous driving vehicle further includes a prompt unit (not shown). The prompt unit is configured to: before the receiving unit receives the category information of the obstacle that is sent by the preset terminal device and that is input by the preset user according to the obstacle information, send, to the preset terminal device, prompt information for indicating an obstacle in the preset driving path, so that the preset terminal device plays the prompt information.

In some alternative implementations of the present embodiment, the instruction generation unit 503 is further configured to if the category information indicates that the obstacle does not belong to the negligible obstacle, input the current state information and the obstacle information of the autonomous driving vehicle to the pre-trained obstacle avoidance model generation to generate obstacle avoidance instruction, the obstacle avoidance model being obtained by training an initial obstacle avoidance model using a plurality of historical obstacle avoidance records.

In some alternative implementations of the present embodiment, the obstacle avoidance apparatus 500 for an autonomous driving vehicle further includes a determination unit (not shown). The determining unit is configured to determine whether there is an obstacle in the preset driving path according to the acquired current environment data of the autonomous driving vehicle before the transmitting unit transmits the obstacle information to the preset terminal device in response to determining that there is an obstacle in the preset driving path.

Referring now to FIG. 6, there is shown a schematic structural diagram of a computer system 600 adapted for implementing an electronic device according to an embodiment of the present disclosure. The electronic device shown in FIG. 6 is only an example and should not impose any limitation on the functionality and scope of embodiments of the present disclosure.

As shown in Fig. 6, the computer system 600 includes a central processing unit (CPU) 601, which may execute various appropriate actions and processes in accordance with a program stored in a read-only memory (ROM) 602 or a program loaded into a random access memory (RAM) 603 from a storage portion 608. The RAM 603 also stores various programs and data required by operations of the system 600. The CPU 601, the ROM 602 and the RAM 603 are connected to each other through a bus 604. An input/output (I/O) interface 605 is also connected to the bus 604.

The following components are connected to the I°C interface 605: a storage portion 606 including a hard disk or the like; and a communication portion 607 including a network 20 network interface card such as a LAN (Local Area Network) card, a modem, or the like. The communication section 607 performs communication processing via a network such as the Internet. The driver 608 is also connected to the I/O interface 605 as desired. A removable medium 609, such as a magnetic disk, an optical disk, a magneto-optical disk, a semiconductor memory, or the like, is mounted on the driver 608 as required so that a computer program read therefrom is installed into the storage portion 606 as required.

In particular, according to embodiments of the present disclosure, the process described above with reference to the flow chart may be implemented in a computer software program. For example, an embodiment of the present disclosure includes a computer program product, which comprises a computer program that is tangibly embedded in a machine-readable medium. The computer program comprises program codes for executing the method as illustrated in the flow chart. In such an embodiment, the computer program may be downloaded and installed from a network via the communication portion 607, and/or may be installed from the removable media 609. The computer program, when executed by the central processing unit (CPU) 601, implements the above mentioned functionalities as defined by the methods of the present disclosure. It should be noted that the computer readable medium in the present disclosure may be computer readable signal medium or computer readable storage medium or any combination of the above two. An example of the computer readable storage medium may include, but not limited to: electric, magnetic, optical, electromagnetic, infrared, or semiconductor systems, apparatus, elements, or a combination any of the above. A more specific example of the computer readable storage medium may include but is not limited to: electrical connection with one or more wire, a portable computer disk, a hard disk, a random access memory (RAM), a read only memory (ROM), an erasable programmable read only memory (EPROM or flash memory), a fibre, a portable compact disk read only memory (CD-ROM), an optical memory, a magnet memory or any suitable combination of the above. In the present disclosure, the computer readable storage medium may be any physical medium containing or storing programs which can be used by a command execution system, apparatus or element or incorporated thereto. In the present disclosure, the computer readable signal medium may include data signal in the base band or propagating as parts of a carrier, in which computer readable program codes are carried. The propagating signal may take various forms, including but not limited to: an electromagnetic signal, an optical signal or any suitable combination of the above. The signal medium that can be read by computer may be any computer readable medium except for the computer readable storage medium. The computer readable medium is capable of transmitting, propagating or transferring programs for use by, or used in combination with, a command execution system, apparatus or element. The program codes contained on the computer readable medium may be transmitted with any suitable medium including but not limited to: wireless, wired, optical cable, RF medium etc., or any suitable combination of the above.

A computer program code for executing operations in the disclosure may be compiled using one or more programming languages or combinations thereof. The programming languages include object-oriented programming languages, such as Java, Smalltalk or C++, and also include conventional procedural programming languages, such as "C" language or similar programming languages. The program code may be completely executed on a user's computer, partially executed on a user's computer, executed as a separate software package, partially executed on a user's computer and partially executed on a remote computer, or completely executed on a remote computer or server. In the circumstance involving a remote computer, the remote computer may be connected to a user's computer through any network, including local area network (LAN) or wide area network (WAN), or may be connected to an external computer (for example, connected through Internet using an Internet service provider).

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion comprising one or more executable instructions for implementing specified logic functions. It should also be noted that, in some alternative implementations, the functions denoted by the blocks may occur in a sequence different from the sequences shown in the figures. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system executing specified functions or operations, or by a combination of a dedicated hardware and computer instructions.

The elements described in the embodiments of the present disclosure may be implemented by means of software or by means of hardware. The described unit may also be provided in a processor, which may be described, for example, as a processor comprising a transmitting unit, a receiving unit, and an instruction generating unit. The name of these units does not constitute a limitation on the unit itself in a certain case. For example, the sending unit may also be described as a unit for "in response to determining that there is an obstacle in a preset travel path, sending obstacle information to a preset terminal device so that the preset terminal device displays the obstacle information on its display page".

In another aspect, the present disclosure further provides a computer-readable medium. The n computer-readable medium may be the computer-readable medium included in the apparatus in the above described embodiments, or a stand-alone computer-readable medium not assembled into the apparatus. The computer-readable medium stores one or more programs. The one or more programs, when executed by a device, cause the apparatus to: send obstacle information to a preset terminal device in response to determining that there is an obstacle in a preset travel path, so that the preset terminal device displays obstacle information on a display page of the preset terminal device, the obstacle information including an image of the obstacle and position information; receiving category information of an obstacle sent by a preset terminal device and inputted by a preset user according to displayed obstacle information, where the category information is used to indicate a category of an obstacle; and determine an obstacle avoidance command of the autonomous driving vehicle according to the category of the obstacle indicated by the category information.

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the disclosure. Technical schemes formed by the above-described features being interchanged with, but not limited to, technical features with similar functions disclosed in the present disclosure are examples.

## Claims

1. An obstacle avoidance method for an autonomous driving vehicle, comprising:
in response to determining that there is an obstacle in a preset travel path, transmitting obstacle information to a preset terminal device so that the preset terminal device displays the obstacle information on a display page of the preset terminal device, the obstacle information including an image of the obstacle and position information;
receiving category information of the obstacle transmitted by the preset terminal device and inputted according to the displayed obstacle information, wherein the category information is used to indicate a category of the obstacle; and
determining an obstacle avoidance instruction of the autonomous driving vehicle according to the category of the obstacle indicated by the category information.

2. The method according to claim 1, wherein the transmitting obstacle information to a preset terminal device in response to determining that there is an obstacle in a preset travel path so that the preset smart terminal device displays the obstacle information in a display page of the preset terminal comprises:
in response to determining that there is the obstacle in the preset travel path, determining reference category information of the obstacle using a pre-trained obstacle category recognition model, wherein the reference category information is used to indicate whether the obstacle belongs to a negligible obstacle; and
transmitting the obstacle information to the preset terminal device so that the preset terminal device displays the obstacle information on the display page of the preset terminal, in response to the reference category information indicating that the obstacle does not belong to the negligible obstacle; wherein
the obstacle category recognition model is obtained by training an initial obstacle category recognition model using a plurality of pieces of historical obstacle information and a plurality of pieces of historical category information of the plurality of historical obstacles respectively set according to the plurality of historical obstacle information, and is configured for determining the reference category information of the obstacle according to the obstacle information.

3. The method according to claim 2, wherein before the receiving category information of the obstacle transmitted by the preset terminal device and inputted according to the displayed obstacle information, the method further comprises:
determining a distance between the obstacle and the autonomous driving vehicle in response to the reference category information indicating that the obstacle does not belong to the negligible obstacle; and
if the distance is smaller than a preset distance threshold, generating an instruction for decelerating.

4. The method according to claim 1, wherein before the receiving category information of the obstacle transmitted by the preset terminal device and inputted according to the displayed obstacle information, the method further comprises:
sending, to the preset terminal device, prompt information for indicating the obstacle in the preset driving path, so that the preset terminal device plays the prompt information.

5. The method according to claim 1, wherein the determining an obstacle avoidance instruction of the autonomous driving vehicle according to the category of the obstacle indicated by the category information comprises:
in response to the category information indicating that the obstacle does not belong to a negligible obstacle, inputting current state information and the obstacle information of the autonomous driving vehicle to a pre-trained obstacle avoidance model to generate an obstacle avoidance instruction, wherein the obstacle avoidance model is obtained by training an initial obstacle avoidance model using a plurality of historical obstacle avoidance records.

6. The method according to claim 1, wherein before the receiving category information of the obstacle transmitted by the preset terminal device and inputted according to the displayed obstacle information, the method further comprises:
based on acquired current environment data of the autonomous driving vehicle, determining whether there is the obstacle in the preset travel path.

7. An obstacle avoidance apparatus for an autonomous driving vehicle comprising:
a transmitting unit configured to in response to determining that there is an obstacle in a preset travel path, transmit obstacle information to a preset terminal device so that the preset terminal device displays the obstacle information on a display page of the preset terminal device, the obstacle information including an image of the obstacle and position information;
a receiving unit configured to receive category information of the obstacle transmitted by the preset terminal device and inputted according to the displayed obstacle information, wherein the category information is used to indicate a category of the obstacle; and
an instruction generating unit configured to determine an obstacle avoidance instruction of the autonomous driving vehicle according to the category of the obstacle indicated by the category information.

8. The apparatus of claim 7, wherein the transmitting unit is further configured to:
in response to determining that there is the obstacle in the preset travel path, determine reference category information of the obstacle using a pre-trained obstacle category recognition model, wherein the reference category information is used to indicate whether the obstacle belongs to a negligible obstacle; and
transmit the obstacle information to the preset terminal device so that the preset terminal device displays the obstacle information on the display page of the preset terminal, in response to the reference category information indicating that the obstacle does not belong to the negligible obstacle; wherein
the obstacle category recognition model is obtained by training an initial obstacle category recognition model using a plurality of pieces of historical obstacle information and a plurality of pieces of historical category information of the plurality of historical obstacles respectively set according to the plurality of historical obstacle information, and is configured for determining the reference category information of the obstacle according to the obstacle information.

9. The apparatus of claim 8, wherein the transmitting unit is further configured to
determine a distance between the obstacle and the autonomous driving vehicle in response to the reference category information indicating that the obstacle does not belong to the negligible obstacle; and
if the distance is smaller than a preset distance threshold, generating an instruction for decelerating.

10. The apparatus according to claim 7, wherein the apparatus further comprises a prompt unit configured to:
before the receiving unit receives category information of the obstacle transmitted by the preset terminal device and inputted according to the displayed obstacle information, send, to the preset terminal device, prompt information for indicating the obstacle in the preset driving path, so that the preset terminal device plays the prompt information.

11. The apparatus of claim 7, wherein the instruction generation unit is further configured to:
in response to the category information indicating that the obstacle does not belong to a negligible obstacle, input current state information and obstacle information of the autonomous driving vehicle to a pre-trained obstacle avoidance model to generate an obstacle avoidance instruction, wherein the obstacle avoidance model is obtained by training an initial obstacle avoidance model using a plurality of historical obstacle avoidance records.

12. The apparatus of claim 7, wherein the apparatus further comprises a determination unit configured to:
before the transmitting unit transmits the obstacle information to the preset terminal device in response to determining that there is the obstacle in the preset travel path, determine whether there is the obstacle in the preset travel path based on acquired current environment data of the autonomous driving vehicle.

13. An electronic device comprising:
one or more processors;
a storage apparatus storing one or more programs,
wherein, the one or more programs when executed by the one or more processors cause the one or more processors to implement the method of any one of claims 1 to 6.

14. A computer readable medium storing a computer program, wherein the program when executed by a processor causes the processor to implement the method of any one of claims 1 to 6.
